# EUROPEAN PATENT SPECIFICATION

(11) **EP 3 097 311 B1**
(45) Date of publication and mention of the grant of the patent: **10.03.2021**
(21) Application number: 15700809.5
(22) Date of filing: 09.01.2015
(51) Int. Cl.: F04D 9/04

(54) **SELFPRIMING SYSTEM HAVING VALVE FOR A CENTRIFUGAL PUMP**
SELBSTANSAUGENDES SYSTEM MIT VENTIL FÜR EINE ZENTRIFUGALPUMPE
SYSTÈME À AUTO-AMORÇAGE AYANT UNE VANNE POUR UNE POMPE CENTRIFUGE

(30) Priority: 24.01.2014 NL 2012135
(43) Date of publication of application: 30.11.2016
(73) Proprietor: Rio Boxx Holding B.V., 3584 AA Utrecht (NL)
(72) Inventor: SPEIJERS, Sam, NL-4235 CD Utrecht (NL)
(74) Representative: Van Breda, Jacobus
(86) International application number: PCT/NL2015/050014
(87) International publication number: WO 2015/112004

(56) References cited:
- WO-A1-2010/015650
- GB-A- 493 821
- GB-A- 1 197 927
- US-A- 1 573 931
- US-A- 1 995 812
- US-A- 2 675 762
- US-A- 4 515 517
- US-A- 4 936 338
- US-A- 5 660 533

## Description

The present invention relates to a system as described in the pre-amble of claim 1.

The present invention also relates to a valve according to claim 11, which can suitably be used in such a system.

Such a system and such a valve are disclosed in GB 1,197,927, which is used for removing dispersed liquids from the ground, comprising a plurality of wellpoints, a liquid pump, conduit means for leading liquid from said wellpoints into said liquid pump, a separation chamber coupled to said conduit means for separating gases from said liquid before it reaches said liquid pump, a second chamber connected to said separation chamber to receive gas therefrom, a gas evacuation pump connected to said second chamber to remove gas therefrom, and means for automatically emptying any liquid accumulated in said second chamber.

US-2002/0168270 A1 discloses a pump system which is configured as an eventually self-priming system comprising a centrifugal pump for fluids, a valve being mounted on the pump head with adjoining supply to the eye of the pump. On the upper side of the conical valve housing, a vacuum pump is connected on one side of the closable passage, and a valve body which, through a tappet, is operated so as to be axially movable by an initially freely suspended spherical float is situated on the other side of the passage, which float keeps the passage open. In operation, the vacuum pump draws in air via the passage and if this causes the level of the fluid in the valve housing to rise, the fluid will contact the spherical float, as a result of which, when the float sinks deeper into the fluid, said float will be lifted under the influence of a gradually increasing force, causing the valve body to close the passage. If the fluid in the pump head is at a level at which the eye is covered with water, the centrifugal pump is able to start pumping. If the supply of fluid stagnates and more and more air accumulates in the valve housing, the eye will no longer be covered with water, causing the pumping of fluid to stop. The increase of air in the valve housing causes the float to drop, thereby opening the passage, and enabling the air to be drawn out of the valve housing by the vacuum pump. Upon opening and closing of the valve, a possibly desirable hysteresis is observed with respect to the instants at which said opening and closing is initiated when the eye is at minimum fluid levels in the valve housing.

A general problem of such systems resides in that the centrifugal pump used as a medium pump is not self-priming and therefore requires a liquid level that reaches up to the eye, whereas an air or vacuum pump, by contrast, cannot be used in combination with fluids. The system according to the prior art does not adequately solve this problem, so that, on the one hand, the efficiency of the medium pump is sub-optimal and, on the other hand, the service life of the air pump leaves to be desired.

The system according to the invention is characterized by the features of claim 1. Accordingly the valve comprises a flexible valve body which serves to successively open or close the apertures, wherein the flexible valve body is formed as a closed band which, on the one hand, is attached to the end of the tappet and, on the other hand, is secured to a plate in which the apertures are provided in two sections on either side of a fastening strip.

An advantage of the system according to the invention resides in that said successive opening or closing of the apertures, which in practice have different sectional dimensions, different mutual distances or patterns, and which system is balanced by the self-weight of the motion mechanism in the valve and the properties of the medium, can take place as vibration-less and noiseless as possible.

The inventor has realized that in order to enable the individual pumps of the system and the system as a whole to function optimally, it is important that the combined action dictated by controlling the passage is optimal. In other words, timing is of essential importance, and from this it follows naturally that it is important that appropriate action is taken particularly in the process of closing the valve passage. By shaping the float such that the upward force growing from the start increases sufficiently rapidly and is strong enough to enable closing of the passage, said passage can be timely opened and closed automatically without medium being drawn into the air pump and without the use of all sorts of artificial measures and electronic means. By virtue thereof, the air pump remains free of medium and more optimal functioning of the medium pump within the scope of operation thereof is achieved in this self-priming system according to the invention.

A further embodiment of the system according to the invention is characterized in that the system comprises medium-supply pipes originating from separate sources, which pipes are jointly connected to the pump head of the medium pump usually through sensor-controlled valves.

By means of this embodiment the foundation is laid of a versatile pump system which is multifunctionally applicable in combination with various separated media and media which can be kept separated, and which requires only one and the same medium pump of the system according to the invention .

Further detailed, possible embodiments, which are set forth in the remaining claims, are mentioned together with the associated advantages in the following description.

The system and the valve according to the present invention will now be explained in greater detail with reference to the figures mentioned below, in which corresponding parts are indicated by means of the same reference numerals. In the Figures:
Figure 1 is a schematic representation of a pump system which is known per se;
Figure 2 shows the system according to the invention, in which a valve is depicted in more detail which accommodates its specifically formed float; and
Figure 3 shows a total system in which the system shown in figure 2 is applied.

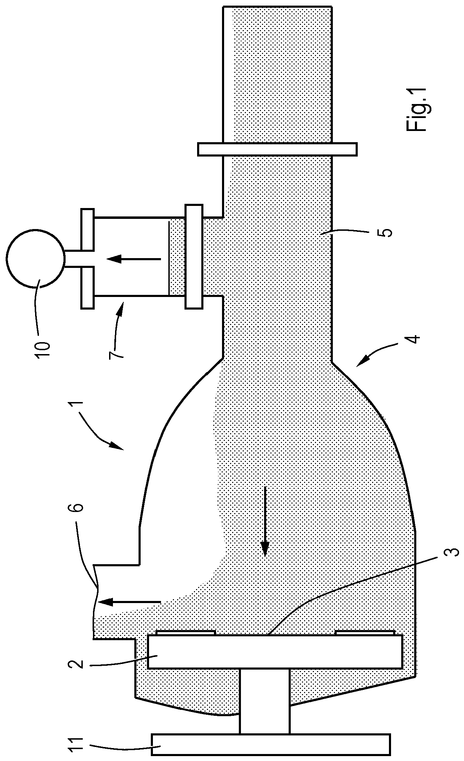

Figure 1 schematically shows a part of a pump system 1 which is known per se, which pump system is built up around a not self-priming type of medium pump 2 incorporated in the system 1. In order to start well, such a pump 2 requires a sufficient amount of medium, usually a fluid, hereinafter referred to as water, around its so-termed eye 3. Examples thereof include a turbo pump, a vortex pump, a centrifugal pump or a vane-cell pump. After starting the pump, water in the pump head 4, which includes the part of the supply pipe 5 directly connected to said pump head, is pumped out through drainage pipes 6.

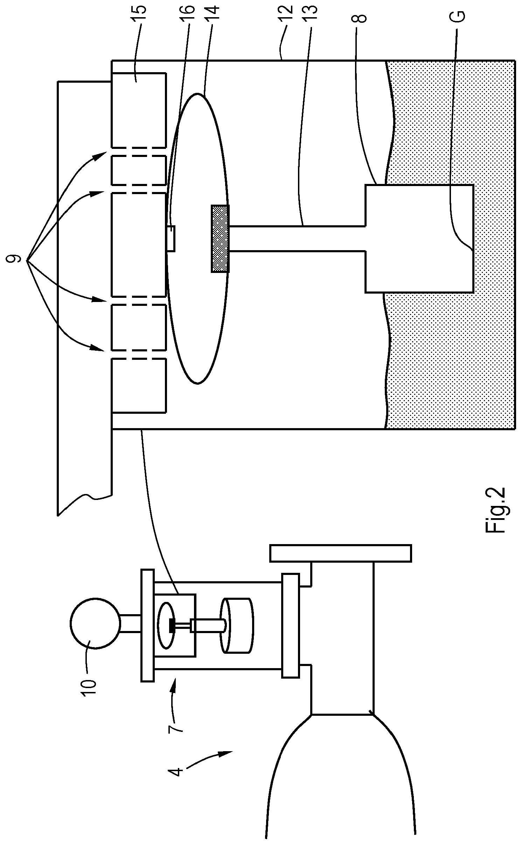

The system 1 further comprises a valve 7, shown in more detail in figure 2, which is coupled to the pump head 4, said valve comprising a passage 9 actuated by means of a float 8, which will be explained in more detail, and an air pump 10, only shown schematically, which is connected at the upper side of the valve 7. The air pump 10, which may be a vacuum pump, will be combined, in practice, with a driving unit 11, which is also used to drive the medium pump 2.

If required, the system 1 further comprises sensors, not shown, which are provided at various locations and which are used as the measuring appliances for, usually, computer-controlled or PLC-controlled known control units which control and regulate the setting in operation and proper functioning of the various parts of the system 1. The operation of the system 1 has been explained hereinbefore with reference to the prior art document US-2002/0168270, and hence has not been repeated here.

By means of the float 8, the level of the medium in the pump head 4 is regulated, and the float 8 is shaped such that, when the pump head 4 is filled with medium, the increase of the upward force of the float is sufficient to close the passage 9 in time, so that the medium does not enter the air pump 10, as this can adversely affect the intended operation thereof, resulting eventually in a shorter service life of the air pump.

In the above-mentioned prior art, the float was ball-shaped. In investigations it was found that, if a ball with a certain radius has sunk to a certain maximum depth in a liquid, the submerged volume of the ball, which determines the upward force which it undergoes, is insufficient to rapidly and sufficiently powerfully close off the passage 9. The shape of the float should be such that, when the pump head 4 is being filled with the medium, the increasing upward force of the float is sufficient to close the passage 9 in time. In other words, the change of the volume of the float as a function of the abovementioned depth must vary such that the resulting upward force is sufficient and changes sufficiently rapidly when the water enters the head 4 and the valve housing 12. If this is the case, the float 8 can timely close, through the tappet 13 connected therewith and the valve body 14, the passage 9.

It has further been found that, if the base G of the float 8 contacting the water is substantially flat, the desired result is achieved. This condition is met by a float 8 which, for example, is substantially block-shaped, box-shaped or cylinder-shaped. The inside diameter of the valve housing 12 is preferably adapted to the shape of the float 8 used. By virtue thereof, splashing of water in the housing 12 is counteracted and the valve 7 remains compact.

According to the invention, the passage is formed by several apertures 9 having, if necessary, different sectional dimensions and/or different mutual distances, or being arranged according to a certain pattern. By virtue thereof, the closing and opening of the passage 9 in the sometimes very virulent environment in which several cubic meters of water and air per minute are displaced, can take place in a rather dosed manner. Such successive opening and closing can be achieved using a flexible valve body 14 which is operated by the float 8 and which is designed to successively open and close the apertures 9.

According to the invention, and as shown in figure 2, the flexible valve body 14 forms a closed band which, on the one hand, is attached to the end of the tappet 13 and, on the other hand, is secured to a plate 15 in which the apertures 9 are provided in two sections on either side of a fastening strip 16.

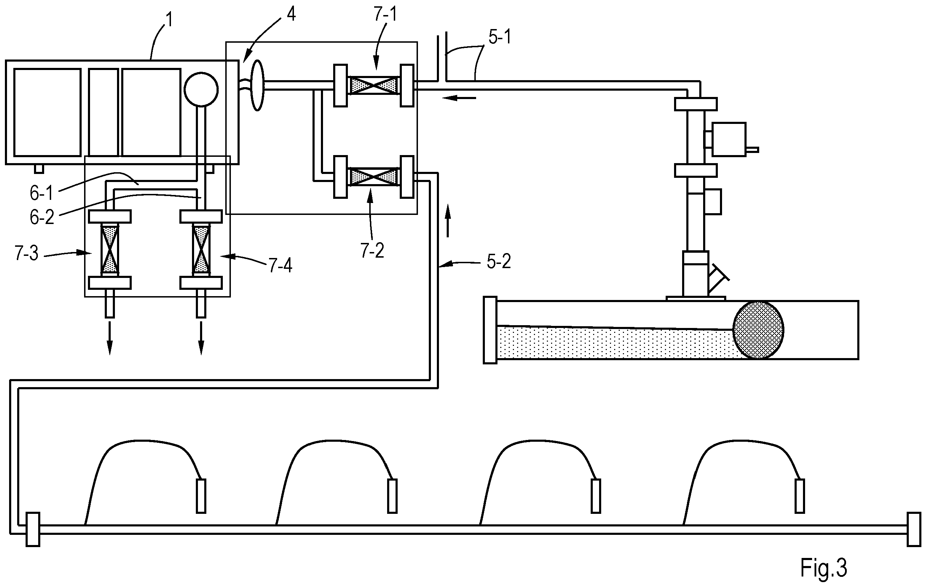

Figure 3 shows a complete system in which the system around the not self-priming medium pump 2 can be applied. The system shown comprises medium-supply pipes 5-1, 5-2 originating from separate sources, which pipes are jointly connected to the pump head 4 of the medium pump 2 usually through sensor-controlled valves 7-1, 7-2. By virtue of this possibility, the system is very versatile, as, for example, dirty water can be handled by the same system as comparatively clean water. For example, a dirty-water system can be temporarily coupled to such an already present clean-water system. By successively driving the individual, controllable valves 7-1, 7-2 in a suitable manner, it is possible to switch over either to one system or to the other system. Said switching over can be performed as a function of time or, depending on the requirements, in a controlled manner by means of fluid sensors.

If such a system requires separate drainage of dirty water and clean water, then controllable valves 7-3, 7-4, are installed in separate drainage pipes 6-1, 6-2. The valves 7-1, 7-2, 7-3, 7-4 are opened and closed in such a manner and order that the media originating from the separate sources, after being pumped by the only medium pump 2, are advantageously pumped out separately through each of the separate drainage pipes 6-1, 6-2.

## Claims

1. A system (1) comprising:
- a not self-priming medium pump (2) provided with a pump head (4) for the supply of medium,
- a valve (7) which is coupled to the pump head (4) and which comprises a passage (9) which is operated by means of a float (8), and
- an air pump (10) connected to the valve (7), wherein the system (1) is arranged to control the level of the medium in the pump head (4) by means of the float (8),
whereby the float (8) is shaped such that, when the pump head (4) is filled with medium, the increasing upward force of the float (8) is sufficient to close the passage (9) in time,
wherein the passage (9) is formed by a plurality of apertures (9), which may be different in section and/or located at mutually different distances from one another, or arranged according to a certain pattern, and
wherein the valve (7) comprises a flexible valve body (14) which is movably actuated by the float (8) through a tappet (13), which valve body (14) serves to successively open or close the apertures (9),
**characterized in that** the flexible valve body (14) is formed as a closed band which, on the one hand, is attached to the end of the tappet (13) and, on the other hand, is secured to a plate (15) in which the apertures (9) are provided in two sections on either side of a fastening strip (16) .

2. The system (1) according to claim 1, **characterized in that** the float's base contacting the medium is substantially flat.

3. The system (1) according to claim 1 or 2, **characterized in that** the float (8) is block-shaped or box-shaped.

4. The system (1) according to any one of claims 1 to 3, **characterized in that** the float (8) is cylinder-shaped.

5. The system (1) according to any one of claims 1 to 4, **characterized in that** the system comprises medium-supply pipes (5; 5-1, 5-2) originating from separate sources, which pipes are jointly connected to the pump head (4) of the medium pump (2) usually through sensor-controlled valves.

6. The system (1) according to claim 5, **characterized in that** the respective supply pipes (5; 5-1, 5-2) are connected to at least one waste water system, for example a temporarily or not temporarily functioning waste water or (pressure) sewage system, or at least one clean water system, for example a water drainage system or a well-point de-watering system.

7. The system (1) according to any one of claims 1 to 6, **characterized in that** the system (1) comprises several separate drainage pipes which are connected to the pump head (4) of the medium usually through sensor-controlled valves (7-1, 7-2, 7-3, 7-4).

8. The system (1) according to any one of claims 5 to 7, **characterized in that** the valves (7-1, 7-2, 7-3, 7-4) are successively opened and closed in such a manner that after the medium originating from separate sources has been pumped by means of the single medium pump (2), said medium is pumped out through the separate drainage pipes.

9. The system (1) according to any one of claims 1 to 8, **characterized in that** the medium pump (2) is a turbo pump, a vortex pump, a centrifugal pump or a vane-cell pump.

10. The system according to any one of claims 1 to 9, **characterized in that** the air pump (10) is a vacuum pump.

11. A valve (7) which is suitable for use in the system (1) according to any one of claims 1 to 10, which valve (7) is provided with a valve housing (12) which is to be filled with a medium, and in which valve housing (12) one or more apertures (9) are closed by means of a float (8), which floats in the medium and which is subject to an upward force,
whereby the float (8) is shaped such that, when the valve housing (12) is filled with the medium, the increasing upward force of the float (8) is sufficient to at least close the one or more apertures (9),
wherein the valve (7) comprises:
- a plurality of apertures (9) which may be different in section and/or located at mutually different distances from one another, or arranged according to a certain pattern, and
- a flexible valve body (14) which is movably actuated by the float (8) through a tappet (13), which valve body (14) serves to successively open or close the apertures (9) **characterized in that** the flexible valve body (14) forms a closed band which, on the one hand, is attached to the end of the tappet (13) and, on the other hand, is secured to a plate (15) in which the apertures (9) are provided in two sections on either side of a fastening strip (16).

12. The valve (7) according to claim 11, **characterized in that** the interior of the valve housing (12) is cylindrical in section and the valve (7) comprises a cylindrical float (8) which can move in said valve housing.

## Patentansprüche

1. System (1), welches Folgendes aufweist:
- eine nicht selbstansaugende Medienpumpe (2), die mit einem Pumpenkopf (4) für die Zufuhr eines Mediums versehen ist,
- ein Ventil (7), das mit dem Pumpenkopf (4) verbunden ist und das einen Durchgang (9) aufweist, der mittels eines Schwimmers (8) gesteuert wird, und
- eine Luftpumpe (10), die mit dem Ventil (7) verbunden ist, wobei das System (1) dafür vorgesehen ist, das Niveau des Mediums in dem Pumpenkopf (4) mittels des Schwimmers (8) zu steuern,
wobei der Schwimmer (8) derart geformt ist, dass, wenn der Pumpenkopf (4) mit dem Medium gefüllt ist, die zunehmend nach oben wirkende Kraft des Schwimmers (8) ausreichend ist, den Durchgang (9) rechtzeitig zu schließen, wobei der Durchgang (9) durch eine Vielzahl von Ausnehmungen (9) gebildet ist, die einen unterschiedlichen Querschnitt aufweisen und/oder mit unterschiedlichen Abständen zueinander angeordnet oder gemäß einem bestimmten Muster angeordnet sein können, und
wobei das Ventil (7) einen flexiblen Ventilkörper (14) aufweist, der durch den Schwimmer (8) über einen Stößel (13) beweglich betätigt wird,
wobei der Ventilkörper (14) dazu dient, die Ausnehmungen (9) nacheinander zu öffnen oder zu schließen,
**dadurch gekennzeichnet, dass**
der flexible Ventilkörper (14) als ein geschlossenes Band ausgebildet ist, das einerseits an dem Ende des Stößels (13) angebracht ist und andererseits an einer Platte (15) befestigt ist, in welcher die Ausnehmungen (9) in zwei Abschnitten auf jeder Seite eines Befestigungsstreifens (16) vorgesehen sind.

2. System (1) nach Anspruch 1,
**dadurch gekennzeichnet, dass**
der das Medium kontaktierende Grundkörper des Schwimmers im Wesentlichen flach ist.

3. System (1) nach Anspruch 1 oder 2,
**dadurch gekennzeichnet, dass**
der Schwimmer (8) blockförmig oder kastenförmig ist.

4. System (1) nach einem der Ansprüche 1 bis 3,
**dadurch gekennzeichnet, dass**
der Schwimmer (8) zylinderförmig ist.

5. System (1) nach einem der Ansprüche 1 bis 4,
**dadurch gekennzeichnet, dass**
das System Medienzuführleitungen (5;5-1,5-2) aufweist, die von unterschiedlichen Quellen ausgehen, wobei die Leitungen gemeinsam mit dem Pumpenkopf (4) der Medienpumpe (2), normalerweise durch sensorgesteuerte Ventile, verbunden ist.

6. System (1) nach Anspruch 5,
**dadurch gekennzeichnet, dass**
die jeweiligen Zuführleitungen (5;5-1,5-2) mit wenigstens einem Abwassersystem verbunden sind, zum Beispiel mit einem temporär oder nicht temporär funktionierenden Abwassersystem oder einer (Druck-)Kanalisation oder zumindest einem Frischwassersystem, zum Beispiel einem Drainagewassersystem oder einem Brunnenketten-Entwässerungssystem.

7. System (1) nach einem der Ansprüche 1 bis 6,
**dadurch gekennzeichnet, dass**
das System (1) mehrere separate Drainageleitungen aufweist, die mit dem Pumpenkopf (4) des Mediums, normalerweise durch sensorgesteuerte Ventile (7-1,7-2,7-3,7-4), verbunden sind.

8. System (1) nach einem der Ansprüche 5 bis 7,
**dadurch gekennzeichnet, dass**
die Ventile (7-1,7-2,7-3,7-4) nacheinander auf eine solche Art und Weise geöffnet und geschlossen werden, dass, nachdem das von unterschiedlichen Quellen stammende Medium mittels der einzelnen Medienpumpe (2) gepumpt worden ist, das Medium durch die separaten Drainageleitungen herausgepumpt wird.

9. System (1) nach einem der Ansprüche 1 bis 8,
**dadurch gekennzeichnet, dass**
die Medienpumpe (2) eine Turbopumpe, eine Freistrompumpe, eine Zentrifugalpumpe oder eine Flügelzellenpumpe ist.

10. System (1) nach einem der Ansprüche 1 bis 9,
**dadurch gekennzeichnet, dass**
die Luftpumpe (10) eine Vakuumpumpe ist.

11. Ventil (7), das zur Verwendung in dem System (1) nach einem der Ansprüche 1 bis 10 geeignet ist, wobei das Ventil (7) mit einem Ventilgehäuse (12) versehen ist, das dafür vorgesehen ist, mit einem Medium befüllt zu werden, und wobei in dem Ventilgehäuse (12) ein oder mehrere Ausnehmungen (9) mittels eines Schwimmers (8) geschlossen werden, der in dem Medium schwimmt und der einer nach oben wirkenden Kraft ausgesetzt ist,
wobei der Schwimmer (8) derart geformt ist, dass, wenn das Ventilgehäuse (12) mit dem Medium gefüllt ist, die zunehmend nach oben wirkende Kraft des Schwimmers (8) ausreichend ist, zumindest die eine oder mehrere Ausnehmungen (9) zu schließen,
wobei das Ventil (7) Folgendes aufweist:
- eine Vielzahl von Ausnehmungen (9), die einen unterschiedlichen Querschnitt aufweisen und/oder mit unterschiedlichen Abständen zueinander angeordnet oder gemäß einem bestimmten Muster angeordnet sein können, und
einen flexiblen Ventilkörper (14), der durch den Schwimmer (8) über einen Stößel (13) beweglich betätigt wird, wobei der Ventilkörper (14) dazu dient, die Öffnungen (9) nacheinander zu öffnen oder zu schließen,
**dadurch gekennzeichnet, dass**
der flexible Ventilkörper (14) ein geschlossenes Band bildet, das einerseits an dem Ende des Stößels (13) angebracht ist und andererseits an einer Platte (15) befestigt ist, in welcher die Ausnehmungen (9) in zwei Abschnitten auf jeder Seite eines Befestigungsstreifens (16) vorgesehen sind.

12. Ventil (7) nach Anspruch 11,
**dadurch gekennzeichnet, dass**
das Innere des Ventilgehäuses (12) im Querschnitt zylindrisch ist und das Ventil (7) einen zylindrischen Schwimmer (8) aufweist, der sich in dem Ventilgehäuse bewegen kann.

## Revendications

1. Système (1) comprenant :
- une pompe à fluide sans auto-amorçage (2) prévue avec une tête de pompe (4) pour l'alimentation du fluide,
- une vanne (7) qui est couplée à la tête de pompe (4) et qui comprend un passage (9) qui est actionné au moyen d'un flotteur (8), et
- une pompe à air (10) raccordée à la vanne (7), où le système (1) est conçu pour contrôler le niveau du fluide dans la tête de pompe (4) au moyen du flotteur (8),
moyennant quoi le flotteur (8) est formé de sorte que, lorsque la tête de pompe (4) est remplie avec le fluide, la force ascendante croissante du flotteur (8) est suffisante pour fermer le passage (9) à temps,
dans lequel le passage (9) est formé par une pluralité d'ouvertures (9), qui peuvent être différentes en coupe et/ou positionnées à des distances mutuellement différentes les unes des autres, ou agencées selon un certain modèle, et
dans lequel la vanne (7) comprend un corps de vanne flexible (14) qui est actionné, de manière mobile, par le flotteur (8) par le biais d'un poussoir (13), lequel corps de vanne (14) sert à ouvrir ou fermer successivement les ouvertures (9),
**caractérisé en ce que** le corps de vanne flexible (14) est formé comme une bande fermée qui, d'une part, est fixée à l'extrémité du poussoir (13) et, d'autre part, est fixée à une plaque (15) dans laquelle les ouvertures (9) sont prévues dans deux sections de chaque côté d'une bande de fixation (16).

2. Système (1) selon la revendication 1, **caractérisé en ce que** la base du flotteur en contact avec le fluide est sensiblement plate.

3. Système (1) selon la revendication 1 ou 2, **caractérisé en ce que** le flotteur (8) est en forme de bloc ou en forme de boîte.

4. Système (1) selon l'une quelconque des revendications 1 à 3, **caractérisé en ce que** le flotteur (8) est en forme de cylindre.

5. Système (1) selon l'une quelconque des revendications 1 à 4, le système étant **caractérisé en ce qu'**il comprend des tuyaux d'alimentation en fluide (5 ; 5-1, 5-2) provenant de sources séparées, lesquels tuyaux sont conjointement raccordés à la tête de pompe (4) de la pompe à fluide (2) habituellement par des vannes commandées par capteur.

6. Système (1) selon la revendication 5, **caractérisé en ce que** les tuyaux d'alimentation (5 ; 5-1, 5-2) respectifs sont raccordés à au moins un système d'eau résiduelle, par exemple un système d'eau résiduelle ou d'égout (pression) fonctionnant temporairement ou non temporairement, ou au moins un système d'eau propre, par exemple un système de drainage d'eau ou un système de déshydratation de point de puits.

7. Système (1) selon l'une quelconque des revendications 1 à 6, le système (1) étant **caractérisé en ce qu'**il comprend plusieurs tuyaux de drainage séparés qui sont raccordés à la tête de pompe (4) du fluide habituellement par le biais de vannes commandées par capteur (7-1, 7-2, 7-3, 7-4).

8. Système (1) selon l'une quelconque des revendications 5 à 7, **caractérisé en ce que** les vannes (7-1, 7-2, 7-3, 7-4) sont successivement ouvertes et fermées de sorte qu'après que le fluide provenant de sources séparées a été pompé au moyen de la pompe à fluide unique (2), ledit fluide est pompé par les tuyaux de drainage séparés.

9. Système (1) selon l'une quelconque des revendications 1 à 8, **caractérisé en ce que** la pompe à fluide (2) est une turbopompe, une pompe à vortex, une pompe centrifuge ou une pompe à palettes.

10. Système selon l'une quelconque des revendications 1 à 9, **caractérisé en ce que** la pompe à air (10) est une pompe à vide.

11. Vanne (7) qui est appropriée pour être utilisée dans le système (1) selon l'une quelconque des revendications 1 à 10, laquelle vanne (7) est prévue avec un boîtier de vanne (12) qui doit être rempli avec un fluide, et dans lequel boîtier de vanne (12), une ou plusieurs ouvertures (9) sont fermées au moyen d'un flotteur (8), qui flotte dans le fluide et qui est soumis à une force ascendante,
moyennant quoi le flotteur (8) est formé de sorte que, lorsque le boîtier de vanne (12) est rempli avec le fluide, la force ascendante croissante du flotteur (8) est suffisante pour au moins fermer les une ou plusieurs ouvertures (9),
où la vanne (7) comprend :
- une pluralité d'ouvertures (9) qui peuvent être différentes en coupe et/ou positionnées à des distances mutuellement différentes les unes des autres, ou agencées selon un certain modèle, et
- un corps de vanne flexible (14) qui est actionné, de manière mobile, par le flotteur (8) par le biais d'un poussoir (13), lequel corps de vanne (14) sert à ouvrir ou fermer successivement les ouvertures (9), le corps de vanne flexible (14) étant **caractérisé en ce qu'**il forme une bande fermée qui, d'une part, est fixée à l'extrémité du poussoir (13) et, d'autre part, est fixée sur une plaque (15) dans laquelle les ouvertures (9) sont prévues dans deux sections de chaque côté d'une bande de fixation (16).

12. Vanne (7) selon la revendication 11, **caractérisée en ce que** l'intérieur du boîtier de vanne (12) est cylindrique en coupe, et la vanne (7) comprend un flotteur cylindrique (8) qui peut se déplacer dans ledit boîtier de vanne.
